Europäisches Patentamt

European Patent Office

Office européen des brevets

(19)

(11) Publication number: **0 039 619**
**B1**

(12) **EUROPEAN PATENT SPECIFICATION**

(45) Date of publication of patent specification: **08.08.84**

(51) Int. Cl.³: **H 04 N 9/31**

(21) Application number: **81301997.3**

(22) Date of filing: **06.05.81**

(54) Projection television apparatus having improved optical configuration.

(30) Priority: **07.05.80 JP 60889/80**

(43) Date of publication of application:
**11.11.81 Bulletin 81/45**

(45) Publication of the grant of the patent:
**08.08.84 Bulletin 84/32**

(84) Designated Contracting States:
**DE FR GB**

(56) References cited:
**US - A - 4 027 328**
**US - A - 4 151 554**

(73) Proprietor: **Matsushita Electric Industrial Co., Ltd.**
**1006, Oaza Kadoma**
**Kadoma-shi Osaka-fu, 571 (JP)**

(72) Inventor: **Miyatake, Yoshito**
**5-103, Toda-cho**
**Moriguchi-shi Osaka-fu (JP)**
Inventor: **Nagaoka, Yoshitomi**
**11-9 Naritaminami-machi**
**Neyagawa-shi Osaka-fu (JP)**
Inventor: **Nakajima, Yasuo**
**18-14 Miyanoshita-cho**
**Hirakata-shi Osaka-fu (JP)**

(74) Representative: **Crawford, Andrew Birkby et al,**
**A.A. THORNTON & CO. Northumberland House**
**303-306 High Holborn**
**London WC1V 7LE (GB)**

Courier Press, Leamington Spa, England.

## Description

The present invention relates to a projection television apparatus, and more particularly to an optical arrangement for combining television images from three monochromatic cathode-ray tubes into a colour image.

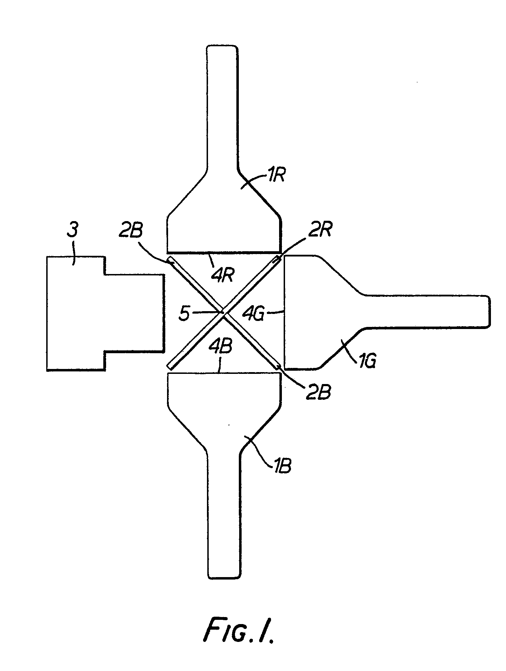

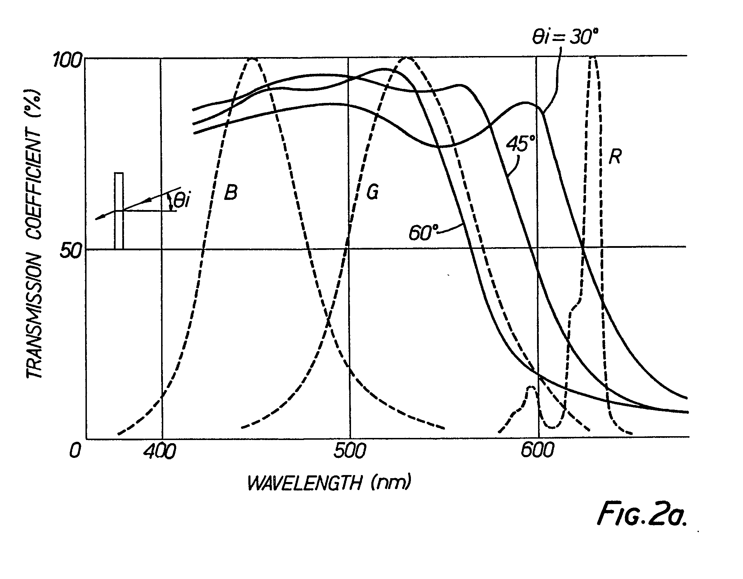

In order to provide a large picture, many types of projection television apparatus have been proposed and some of them have dichroic mirrors; U.S. Patent 4,151,554 discloses a typical conventional projection television apparatus having dichroic mirrors. Figure 1 illustrates diagrammatically the structure of the main portion of the typical conventional projection apparatus. As shown, the main portion comprises three monochromatic cathode-ray tubes (1R), (1G) and (1B), two dichroic mirrors (2R) and (2B), and a lens (3). The three tubes (1R), (1G) and (1B) display red, green and blue images, respectively. One dichroic mirror (2R) is a red-type dichroic mirror which reflects red light but transmits green and blue light. Another dichroic mirror (2B) is a blue-type dichroic mirror that reflects blue light but transmits red and green light. The red tube (1R) and the blue tube (1B) are placed in the same plane and on either side of the green tube (1G) to form the letter "T", with their faceplates (4R), (4G) and (4B) close to each other and forming three sides of a rectangular parallelepipedal space. Two dichroic mirrors (2R) and (2B) are disposed in the space and are crossed at right angles to each other. Every angle between a normal of a dichroic mirror and an optical axis of the tube is 45°. The lens (3) is placed on the axis of the green tube (1G) and constitutes the fourth side of the rectangular parallelepipal space enclosing the dichroic mirrors (2R) and (2B). Employing such apparatus as shown in Figure 1, the red, green and blue images from three tubes (1R), (1G) and (1B) are combined into the colour image by the dichroic mirrors (2R) and (2B), and the resulting colour image is enlarged and projected on a screen (not shown) by the lens (3).

The apparatus shown in Figure 1 has some advantages as follows, because the optical axes of the red, green and blue light beams radiating from the lens (3) are in co-incident.

1. The projection distance from the lens (3) to the screen is variable by moving the lens (3) back and forth.

2. Because each optimum image surface of red, green and blue can be adjusted to agree with one another on the screen, this apparatus provides a high-resolution image over the entire screen area.

3. Because the shape of the projected image on the screen is similar in each colour to the shape of the image on the tube (1R), (1G) and (1B), convergence adjustment circuits are not essential for this apparatus in principle. Even if the convergence adjustment is necessary, it is easy and convergence may be fully achieved.

4. Even when using a hightiy-directional screen, observers never observe a colour-change due to moving their observation position relative to the screen.

On the other hand, this apparatus shown in Figure 1 has a disadvantage as follows. When the tubes (1R), (1G) and (1B) are driven to display uniform-brightness images, the phenomenon that the colour is dependent on the location in a horizontal or vertical direction on the screen is observed (this is so-called colour shading). The extreme of this phenomenon is observed when using a lens with a small F-number and when using a wide angle lens.

This phenomenon can be illustrated as follows.

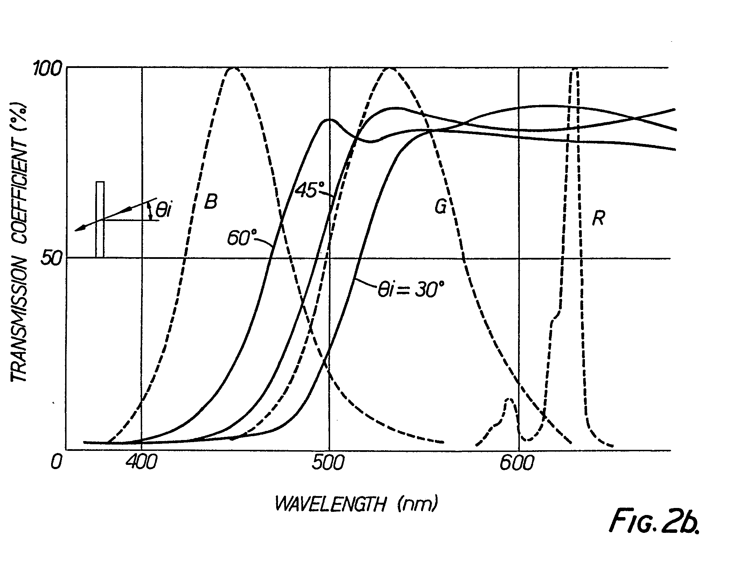

Figure 2a shows an example of the relationship between the transmission coefficient and the wavelength of a ray of light, as it is affected by the red-type dichroic mirror (2R). The parameter in this figure is an angle of incidence $\theta_i$ for the ray of light with respect to the mirror. Curves (R), (G) and (B) drawn in dashed lines show the emitting spectrums of the phosphors used on the tubes (1R), (1G) and (1B), respectively. Figure 2b shows an example of the relationship between transmission coefficient and the wavelength of a ray of light as it is affected by the blue-type dichroic mirror (2B). As may be seen from Figures 2a and 2b, a cutoff wavelength (a cutoff wavelength is defined here as the wavelength where the transmission coefficient is 50%) depends on the angle of incidence $\theta_i$. As the angle of incidence $\theta_i$ increases, the cutoff wavelength becomes shorter. The relation between the reflectivity and the wavelength is almost the same as that obtained when the above graph is reversed, and the ordinate axis named the reflectivity (in Figures 2a and 2b above).

As is seen from Figures 2a and 2b when the cutoff wavelength is moved, the transmission coefficient or reflectivity of the dichroic mirrors (2R) and (2B) changes near the cutoff wavelength, so that the light intensity of the transmitting ray or the reflected ray changes. Consider the characteristics of the red-type dichroic mirror (2R), assuming that the cutoff wavelength of the red-type dichroic mirror (2R), for $\theta_i=45°$, is between the red emitting spectrum (R) and the green emitting spectrum (G), as shown in Figure 2a. In case of $\theta_i=30°$, the cutoff wavelength gets close to the red emitting spectrum (R), and the light intensity of the red reflected ray becomes weaker than in the case of $\theta_i=45°$, though the light intensity of the green transmitting ray does not change so much. And also in case of $\theta_i=60°$, the cutoff wavelength gets close to the green emitting spectrum (G), and the light intensity of the green transmitting ray becomes weaker than the case of $\theta_i=45°$, though the light intensity of the red reflected ray does not change so much.

The blue-type dichroic mirror (2B) exhibits a similar phenomenon.

It is also seen from Figures 2a and 2b that changes of the angle of incidence $\theta_i$ causes change of the transmission coefficient at some wavelength, so that the light intensity of the transmitting ray or the reflected ray from the dichroic mirrors (2R) and (2B) is changed.

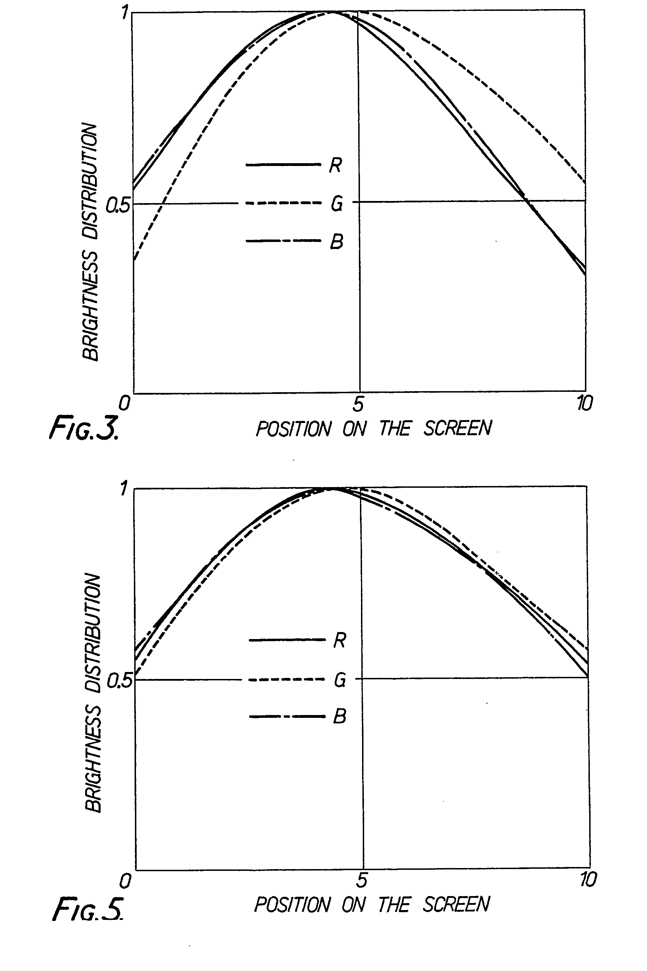

Figure 3 shows the brightness distribution of the red, green and blue images on the screen through the line perpendicular to the line of intersection (5) of the mirrors as shown in Figure 1. The brightness of each colour decreases from the centre toward the right and left sides. This is because the light beam through the lens (3) reduces in intensity as the field angle increases. Each curve shown in Figure 3 is not symmetric with respect to the right side and the left side. This is because the angles of incidence with respect to the dichroic mirror are different between the right side and left side, so that this difference causes the difference of both the cutoff wavelength and the transmission coefficient between the right side and the left side. Comparing the brightness distributions of each colour, it is seen that the distributions of red and blue have the same tendency, but the distribution of green has the opposite tendency to red or blue, and that the brightness ratios of red, green and blue depend on the location on the screen. The brightness ratio is defined as the ratio of brightness of one colour in question to total brightness of the three colours. The difference of the brightness ratios becomes greater toward the periphery of the projected image, which causes the colour-shading phenomenon.

A method of displaying images has been proposed for alleviating the colour shading problem in which the brightness distributions are dependent upon the location in the horizontal or vertical direction, on three tubes (1R), (1G) and (1B), so that the brightness ratios are uniform over all areas of the screen. According to this method the phenomenon of colour shading can be improved. But this method is undesirable, because overload occurs on the area of the tubes (1R), (1G) and (1B) where high-brightness images are displayed. This overload causes decrease of the life-time of the tubes (1R), (1G) and (1B). This method is also undesirable, since the area of the tubes (1R), (1G) and (1B), where low-brightness images are displayed, is too large.

It is an object of the present invention to provide a projection television apparatus which exhibits improved colour shading, without touching the tube circuits, and without adding appreciably to the cost.

The present invention provides projection television apparatus comprising three cathode-ray tubes which display red, green and blue images respectively and which are placed relative to each other to form the letter "T" with their faceplates close to each other; two dichroic mirrors placed to cross like a character "X" in the space formed by said faceplates and intersecting to form the letter "X", which mirrors reflect different colours, and a lens which is placed on the optical axis of the centre tube of said three tubes characterised in that at least one of said dichroic mirrors consists of two dichroic mirror sections which are separated through the line of intersection of the mirrors, and which have different transmission characteristics from each other so as to minimize the difference of brightness ratios of respective colours.

Features and advantages of the present invention will appear more fully hereinafter from a consideration of the following description of an embodiment thereof when taken in connection with the accompanying drawings, in which:—

Figure 1 is a diagrammatic cross-sectional view of a main portion of a previously proposed projection television apparatus;

Figures 2a and 2b are examples of the transmission characteristics of a red-type dichroic mirror and a blue-type dichroic mirror, respectively;

Figure 3 shows brightness distribution patterns for each colour on the screen, which illustrates the undesirable phenomenon of colour shading;

Figure 4 is a diagrammatic cross-sectional view of a main portion of a projection television apparatus according to the present invention; and

Figure 5 shows brightness distribution patterns of each colour on the screen, which illustrates the effect of an embodiment according to the present invention.

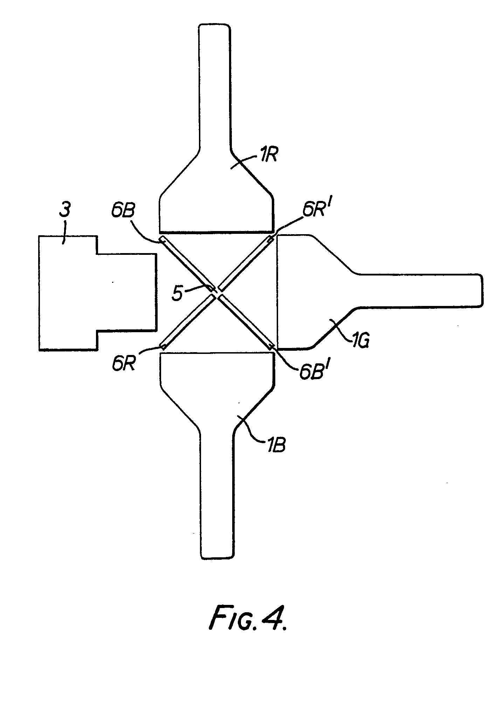

Referring now to Figure 4, which is quite similar to Figure 1 except for the dichroic mirrors, this shows an example of a structure of the main portion of an embodiment according to the present invention. The red-type dichroic mirror is formed from two sections (6R) and (6R') which are separated through the line of intersection (5) i.e. at the optical axis of the lens 3. The cutoff wavelengths of the two sections are different. The dichroic mirror section (6R') which is placed further from the lens (3) has a longer cutoff wavelength than the dichroic mirror section (6R) which is placed nearer the lens (3). The blue-type dichroic mirror is formed from two sections (6B) and (6B') which are separated through the line of intersection (5). The cutoff wavelengths of the two sections are different. The dichroic mirror section (6B') which is placed further from the lens (3) has a longer cutoff wavelength than the dichroic mirror section (6B) which is placed nearer the lens (3). Additionally, the angle of incidence that makes the transmission coefficient of the dichroic mirror sections (6R') and (6B') maximum at the wavelength of green is greater than the angle of incidence that makes the transmission coefficient of the dichroic mirror sections (6R) and (6B) maximum at the same wavelength. This arises because, considering many rays of light from the tubes (1R), (1G) and (1B) to the lens (3), the angles of incidence on the dichroic mirror sections (6R') and (6B') are relatively greater than those on the dichroic mirror sections (6R) and (6B).

For whatever cutoff wavelengths and optimum angles of incidence for every dichroic mirror section (6R), (6R'), (6B) and (6B'), the brightness distribution patterns of red, green and blue, which are measured on the screen through the line perpendicular to the line of intersection (5) are as shown in Figure 5. Comparing Figure 5 with Figure 3 it will be seen that the high-brightness side (left hand side) shown in Figure 3 is little changed for each colour, but the low-brightness side shown in Figure 3 (right hand side) is brighter for each colour in Figure 5. In addition, the brightness distribution patterns of each colour become very much more symmetric. Consequently the difference of the brightness ratios of respective colours become smaller than those of Figure 3 or is minimized, which means an improvement of the colour shading. Though in Figure 5 the brightness distribution patterns of each colour are not in perfect accord, this problem is not significant in practice, because it is impossible for the human eye to distinguish so small a difference of the brightness ratios of each colour.

Though Figure 4 shows the example where the green tube is placed opposite the lens (3), the red tube (1R) or the blue tube (1B) could equally well be placed opposite the lens (3), and a similar effect can be obtained.

Because it is necessary to cross the red-type dichroic mirror and the blue-type dichroic mirror as shown in Figure 1, it is necessary to cut at least one of the dichroic mirrors in two through the line of intersection (5). Therefore, there is no harm in cutting both dichroic mirrors in two through the line of intersection (5) as shown in Figure 4.

As mentioned above, the preferred embodiment of the present invention provides an improvement in colour shading, and this improvement is achieved at the same cost as with the previous proposal without overloading the colour tubes, and without altering the circuits for the tubes.

## Claims

1. Projection television apparatus comprising: three cathode-ray tubes (1R, 1G, 1B) which display red, green and blue images respectively and which are placed relative to each other to form the letter "T" with their faceplates close to each other; two dichroic mirrors (6) placed to cross like a character "X" in the space formed by said faceplates and intersecting to form the letter "X", which mirrors reflect different colours, and a lens (3) which is placed on the optical axis of the center tube (1G) of said three tubes (1R, 1G, 1B), characterised in that at least one of said dichroic mirrors (6) consists of two dichroic mirror sections (6R, 6R' or 6B, 6B') which are separated through the line of intersection (5) of the mirrors (6), and which have different transmission characteristics from each other so as to minimize the difference of brightness ratios of respective colours.

2. Projection television apparatus as claimed in claim 1, wherein said two dichroic mirror sections (6R, 6R' or 6B, 6B') have different cutoff wavelengths at the same angle of incidence.

3. Projection television apparatus as claimed in claim 2, wherein said dichroic mirror section (6R', 6B') which is placed further from said lens (3) has a longer cutoff wavelength at the same angle of incidence than said dichroic mirror section (6R, 6B) which is placed nearer said lens (3).

4. Projection television apparatus as claimed in any one of the preceding claims wherein said two dichroic mirror sections (6R, 6R' or 6B, 6B') have different optimum angles of incidence so as to make the transmission coefficient maximum at a particular wavelength.

5. Projection television apparatus as claimed in claim 4, wherein said optimum angle of said dichroic mirror section (6R', 6B') which is placed further from said lens (3) is greater than said optimum angle of said dichroic mirror section (6R, 6B) which is placed nearer said lens (3).

6. Projection television apparatus as claimed in any one of the preceding claims wherein both dichroic mirrors (6) are separated through the line of intersection (5) of the mirrors.

## Patentansprüche

1. Projektions-Fernsehgerät mit folgenden Merkmalen: drei Kathodenstrahlröhren (1R, 1G, 1B), die jeweils rote, grüne und blaue Bilder anzeigen und die relativ zueinander angeordnet sind, um den Buchstaben "T" bei nahe aneinanderliegenden Frontflächen zu bilden; zwei dichroitischen Spiegeln (6), die angeordnet sind, um sich wie ein Buchstabe "X" in dem Raum zu kreuzen, der durch die Frontflächen gebildet wird, und die sich schneiden, um den Buchstaben "X" zu bilden, wobei die Spiegel verschiedene Farben reflektieren, und einer Linse (3), die in der optischen Achse der mittleren Röhre (16) der drei Röhren (1R, 1G, 1B) angeordnet ist, dadurch gekennzeichnet, daß wenigstens einer der dichroitischen Spiegel (6) aus zwei dichroitischen Spiegelabschnitten (6R, 6R' oder 6B, 6B') besteht, die durch die Schnittlinie (5) der Spiegel (6) getrennt sind, und die voneinander verschiedene Übertragungscharakteristika haben, um die Abweichung der Helligkeitsverhältnisse der verschiedenen Farben zu minimieren.

2. Projektions-Fernsehgerät nach Anspruch 1, dadurch gekennzeichnet, daß die beiden dichroitischen Spiegelabschnitte (6R, 6R' oder 6B, 6B') verschiedene Grenzwellenlängen bei dem gleichen Einfallswinkel haben.

3. Projektions-Fernsehgerät nach Anspruch 2, bei dem der dichroitische Spiegelabschnitt (6R', 6B'), der weiter von der Linse (3) entfernt angeordnet ist, eine längere Grenzwellenlänge bei dem gleichen Einfallswinkel hat als derjenige des dichroitischen Spiegelabschnitts (6R, 6B), der näher an der Linse (3) angeordnet ist.

4. Projektions-Fernsehgerät nach einem der vorhergehenden Ansprüche, bei dem die zwei dichroitischen Spiegelabschnitte (6R, 6R' oder 6B, 6B') verschiedene optimale Einfallswinkel haben, damit der Übertragungskoeffizient bei einer speziellen Wellenlänge maximal wird.

5. Projektions-Fernsehgerät nach Anspruch 4, bei dem der optimale Winkel des dichroitischen Spiegelabschnitts (6R', 6B'), der weiter von der Linse (3) entfernt angeordnet ist, größer ist als der optimale Winkel des dichroitischen Spiegelabschnittes (6R, 6B), der näher an der Linse (3) angeordnet ist.

6. Projektions-Fernsehgerät nach einem der vorhergehenden Ansprüche, bei dem beide dichroitische Spiegel (6) durch die Schnittlinie (5) der Spiegel voneinander getrennt sind.

## Revendications

1. Appareil de télévision pour projection comprenant: trois tubes à rayons cathodiques (1R), (1G) et (1B) qui visualisent respectivement des images rouge, verte et bleu et qui sont mutuellement disposées de façon à former la lettre "T", leurs plaques faciales étant proches les unes des autres; deux miroirs dichroïques (6) placés de façon à se croiser comme un caractère (X) dans l'espace formé par lesdites plaques faciales et se coupant de façon à former la lettre "X", lesquels miroirs réfléchissent des couleurs différentes, et un objectif optique (3) qui est placé sur l'axe optique du tube (1G) disposé centralement parmi lesdits trois tubes (1R), (1G), (1B), caractérisé en ce qu'au moins l'un desdits miroirs dichroïques (6) est constitué de deux sections (6R, 6R' ou 6B, 6B') de miroir dichroïque qui sont séparées par la ligne d'intersection (5) des miroirs (6), et qui ont des caractéristiques de transmission mutuellement différentes de façon à minimiser la différence des rapports de luminance des couleurs respectives.

2. Appareil de télévision pour projection selon la revendication 1, où les deux sections de miroir dichroïque (6R, 6R' ou 6B, 6B') ont des longueurs d'onde de coupure différentes au même angle d'incidence.

3. Appareil de télévision pour projection selon la revendication 2, où ladite section (6R', 6B') de miroir dichroïque qui est placée plus loin dudit objectif (3) possède une longueur d'onde de coupure plus grande au même angle d'incidence que ladite section (6R, 6B) de miroir dichroïque qui est placée plus près de l'objectif (3).

4. Appareil de télévision pour projection selon l'une quelconque des revendications précédentes, où lesdites deux sections de miroir dichroïque (6R, 6R', ou 6B, 6B') ont des angles d'incidence optimaux différents permettant de rendre maximal le coefficient de transmission pour une longueur d'onde particulière.

5. Appareil de télévision pour projection selon la revendication 4, où ledit angle optimal de ladite section (6R', 6B') de miroir dichroïque qui est placée plus loin dudit objectif (3) est supérieur audit angle optimal de ladite section (6R, 6B) de miroir dichroïque qui est placé plus près dudit objectif (3).

6. Appareil de télévision pour projection selon l'une quelconque des revendications précédentes, où les deux miroirs dichroïques (6) sont séparés par la ligne d'intersection (5) des miroirs.

FIG. 1.

FIG.2a.

FIG. 2b.

*FIG.3.*

BRIGHTNESS DISTRIBUTION

POSITION ON THE SCREEN

R
G
B

*FIG.5.*

BRIGHTNESS DISTRIBUTION

POSITION ON THE SCREEN

R
G
B

4

FIG. 4.